(19) Europäisches Patentamt
European Patent Office
Office européen des brevets

(11) EP 1 297 053 B1

(12) EUROPÄISCHE PATENTSCHRIFT

(45) Veröffentlichungstag und Bekanntmachung des Hinweises auf die Patenterteilung:
**16.02.2005 Patentblatt 2005/07**

(21) Anmeldenummer: **01951628.5**

(22) Anmeldetag: **22.06.2001**

(51) Int Cl.7: **C08G 69/04**, C08G 69/16

(86) Internationale Anmeldenummer:
**PCT/EP2001/007120**

(87) Internationale Veröffentlichungsnummer:
**WO 2002/000766 (03.01.2002 Gazette 2002/01)**

(54) **POLYAMIDE**

POLYAMIDES

POLYAMIDES

(84) Benannte Vertragsstaaten:
**AT BE CH CY DE DK ES FI FR GB GR IE IT LI LU MC NL PT SE TR**
Benannte Erstreckungsstaaten:
**RO SI**

(30) Priorität: **28.06.2000 DE 10030515**

(43) Veröffentlichungstag der Anmeldung:
**02.04.2003 Patentblatt 2003/14**

(73) Patentinhaber: **BASF AKTIENGESELLSCHAFT
67056 Ludwigshafen (DE)**

(72) Erfinder:
- **BEVER, Paul-Michael
D-67434 Neustadt (DE)**
- **Dardin, Ulrike
D-69514 Laudenbach (DE)**
- **VON BERNSTORFF, Bernd-Steffen
D-67157 Wachenheim (DE)**
- **CONZELMANN, Gerhard
D-67166 Otterstadt (DE)**

(56) Entgegenhaltungen:
**WO-A-99/41297**

EP 1 297 053 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die vorliegende Erfindung betrifft ein Verfahren zur Herstellung von aus Monomeren (I), ausgewählt aus der Gruppe bestehend aus Lactamen, w-Aminocarbonsäuren, w-Aminocarbonsäurenitrilen, w-Aminocarbonsäureamiden, w-Aminocarbonsäuresalze, w-Aminocarbonsäureester, äquimolaren Mischungen aus Diaminen und Dicarbonsäuren, Dicarbonsäure/Diamin-Salzen, Dinitrilen und Diaminen oder Gemischen solcher Monomere, zugänglichen Polyamiden (VIII), dadurch gekennzeichnet, daß die Polymerisation der Monomere (I) in Gegenwart von

(II) 0,01 bis 0,5 Gew.-% eines sterisch gehinderten Piperidin-Derivats, das eine zur Amidbildung hinsichtlich des Polyamids (VIII) fähige funktionelle Gruppe aufweist,

(III) 0,01 bis 0,5 Gew.-% einer Verbindung mit mehreren zur Amidbildung hinsichtlich des Polyamids (VIII) fähigen Amingruppen

und gegebenenfalls einer Verbindung ausgewählt aus der Gruppe bestehend aus
einer Verbindung (IV) mit einer zur Amidbildung hinsichtlich der Polymerhauptkette von Polyamid (VIII) fähigen Amingruppe,
einer Verbindung (V) mit einer zur Amidbildung hinsichtlich der Polymerhauptkette von Polyamid (VIII) fähigen Carbonsäuregruppe
oder einer von Monomer (I) abweichenden Verbindung (VI) mit mehreren zur Amidbildung hinsichtlich der Polymerhauptkette von Polyamid (VIII) fähigen Carbonsäuregruppen
oder deren Gemische
durchgeführt wird, wobei sich die Mengen an (I), (II), (III), (IV), (V) und (VI) zu 100 % ergänzen, die Komponenten (II), (III), (IV), (V) und (VI) über Amidbindungen an die Polymerkette gebunden sind und die Summe der zur Amidbildung hinsichtlich der Polymerkette fähigen Amingruppen der Komponenten (II), (III) und (IV) größer als oder gleich wie die Summe der zur Amidbildung hinsichtlich der Polymerkette fähigen Carbonsäuregruppen der Komponenten (II), (V) und (VI) ist.

Ferner betrifft sie nach diesem Verfahren erhältliche Polyamide, die Verwendung solcher Polyamide zur Herstellung von Fasern, Flächengebilden und Formkörpern, sowie Fasern, Flächengebilde und Formkörper, die aus solchen Polyamiden erhältlich sind.

Die Verwendung von Polyamiden zur Herstellung von Fasern und Garnen ist allgemein bekannt, beispielsweise aus: Ullmann's Encyclopedia of Industrial Chemistry, 5. Ed., Vol. A10, VCH Verlagsgesellschaft mbH, Weinheim, Deutschland, 1987, Seite 567-579.

Die Garnherstellung erfolgt in an sich bekannter Weise durch Aufschmelzen des Polyamids, Verspinnen des Polyamids zu einer Faser, Verstrecken und Texturieren dieser Faser und gegebenenfalls Nachbehandlung der Faser. Daran kann sich eine Kablierung und Hitzefixierung des Garns anschließen.

Verfahren zur Fixierung sind an sich bekannt, wie das Heat-Set-Verfahren der Firma Hörauf-Suessen, Deutschland.

Wesentlicher Schritt der Fixierung ist die Führung des Garns durch eine Klimakammer unter definierten Verfahrensbedingungen, wie Verweilzeit des Garns sowie Temperatur und relative Feuchtigkeit der Atmosphäre in der Klimakammer.

Nachteilig ist dabei, daß sich die Qualität, beispielsweise die APHA-(Hazen)-Zahl gemäß der europäischen Norm EN 1557 (entsprechend US-Norm ASTM D1003) und die relative Viskosität von Garnen aus an sich bekannten Polyamiden, bei dieser Fixierung deutlich verschlechtert. Das Absinken der relativen Viskosität und die Erhöhung der APHA-Zahl sind Hinweise auf Degradation, also eine Schädigung, des Polymers.

Der vorliegenden Erfindung lag die Aufgabe zugrunde, Polyamide zur Verfügung zu stellen, aus denen Fasern, Folien oder Formkörper, insbesondere Garne, hergestellt werden können, die die genannten Nachteile nicht aufweisen, sowie Verfahren, die die Herstellung solcher Polyamide auf technisch einfache und wirtschaftliche Weise ermöglichen.

Demgemäß wurden das eingangs definierte Verfahren, nach einem solchen Verfahren erhältliche Polyamide, die eingangs definierten Polyamide, die Verwendung solcher Polyamide zur Herstellung von Fasern, Flächengebilden und Formkörpern, sowie Fasern, Flächengebilde und Formkörper, die aus solchen Polyamiden erhältlich sind, gefunden.

Unter Polyamiden werden Homopolymere, Copolymere, Mischungen und Pfropfungen von synthetischen langkettigen Polyamiden verstanden, die als wesentlichen Bestandteil wiederkehrend Amid-Gruppen in der Polymer-Hauptkette aufweisen. Beispiele solcher Polyamide sind Nylon 6 (Polycaprolactam), Nylon 6,6 (Polyhexamethylenadipamid), Nylon 4,6 (Polytetramethylenadipamid), Nylon 6,10 (Polyhexamethylensebacamid), Nylon 6,12 (Poly-hexamethylen-1,10-decandicarbonsäure-amid), Nylon 7 (Polyenantholactam), Nylon 11 (Polyundecanolactam), Nylon 12 (Polydodecanolactam). Diese Polyamide tragen bekanntermaßen den generischen Namen Nylon. Unter Polyamiden

werden auch die sogenannten Aramide verstanden (aromatische Polyamide), wie Poly-metaphenylen-isophthalamid (NOMEX ® Faser, US-A-3,287,324) oder Poly-paraphenylen-terephthalamid (KEVLAR ® Faser, US-A-3,671,542).

Die Herstellung von Polyamiden kann prinzipiell nach zwei Verfahren erfolgen.

Bei der Polymerisation aus Dicarbonsäuren und Diaminen, wie auch bei der Polymerisation aus Aminosäuren oder deren Derivaten, wie Aminocarbonsäurenitrilen, Aminocarbonsäureamiden, Aminocarbonsäureestern oder Aminocarbonsäuresalzen, reagieren die Amino- und Carboxyl-Endgruppen der Ausgangsmonomere oder Ausgangsoligomere miteinander unter Bildung einer Amid-Gruppe und Wasser. Das Wasser kann anschließend von der Polymermasse entfernt werden. Bei der Polymerisation aus Carbonsäureamiden reagieren die Amino- und Amid-Endgruppen der Ausgangsmonomere oder Ausgangsoligomere miteinander unter Bildung einer Amid-Gruppe und Ammoniak. Der Ammoniak kann anschließend von der Polymermasse entfernt werden. Diese Polymerisationsreaktion bezeichnet man üblicherweise als Polykondensation.

Die Polymerisation aus Lactamen als Ausgangsmonomeren oder Ausgangsoligomeren bezeichnet man üblicherweise als Polyaddition.

Erfindungsgemäß setzt man Monomere (I) ausgewählt aus der Gruppe bestehend aus Lactamen, w-Aminocarbonsäuren, w-Aminocarbonsäurenitrilen, w-Aminocarbonsäureamiden, w-Aminocarbonsäuresalze, w-Aminocarbonsäureester, äquimolaren Mischungen aus Diaminen und Dicarbonsäuren, Dicarbonsäure/Diamin-Salzen, Dinitrilen und Diaminen oder Gemischen solcher Monomere ein.

Als Monomere (I) kommen

Monomere oder Oligomere eines $C_2$ - bis $C_{20}$ - vorzugsweise $C_2$ - bis $C_{18}$ - arylaliphatischen oder vorzugsweise aliphatischen Lactams , wie Enantholactam, Undecanolactam, Dodecanolactam oder Caprolactam,

Monomere oder Oligomere von $C_2$ - bis $C_{20}$ -, vorzugsweise $C_3$ - bis $C_{18}$ - Aminocarbonsäuren, wie 6-Aminocapronsäure, 11-Aminoundecansäure, sowie deren Dimere, Trimere, Tetramere, Pentamere oder Hexamere, sowie deren Salze, wie Alkalisalze, beispielsweise Lithium-, Natrium-, Kalium-Salze,
$C_2$ - bis $C_{20}$ -, vorzugsweise $C_3$ - bis $C_{18}$ - Aminocarbonsäurenitrilen, wie 6-Aminocapronitril, 11-Aminoundecansäurenitril,

Monomere oder Oligomere von $C_2$ - bis $C_{20}$ - Aminosäuramiden, wie 6-Aminocapronsäureamid, 11-Aminoundecansäureamid sowie deren Dimere, Trimere, Tetramere, Pentamere oder Hexamere,

Ester, vorzugsweise $C_1$-$C_4$-Alkylester, wie Methyl-, Ethyl-, n-Propyl-, i-Propyl-, n-Butyl-, i-Butyl-, s-Butyl-ester, von $C_2$ - bis $C_{20}$ -, vorzugsweise $C_3$ - bis $C_{18}$ - Aminocarbonsäuren, wie 6-Aminocapronsäureester, beispielsweise 6-Aminocapronsäuremethylester, 11-Aminoundecansäureester, beispielsweise 11-Aminoundecansäuremethylester,
Monomere oder Oligomere eines $C_2$ - bis $C_{20}$ -, vorzugsweise $C_2$ - bis $C_{12}$ - Alkyldiamins, wie Tetramethylendiamin oder vorzugsweise Hexamethylendiamin,
mit einer $C_2$ - bis $C_{20}$ -, vorzugsweise $C_2$ - bis $C_{14}$ - aliphatischen Dicarbonsäure oder deren Mono- oder Dinitrile, wie Sebacinsäure, Decandicarbonsäure, Adipinsäure, Sebacinsäuredinitril, Decansäuredinitril oder Adipodinitril,
sowie deren Dimere, Trimere, Tetramere, Pentamere oder Hexamere,
Monomere oder Oligomere eines $C_2$ - bis $C_{20}$ -, vorzugsweise $C_2$ - bis $C_{12}$ - Alkyldiamins, wie Tetramethylendiamin oder vorzugsweise Hexamethylendiamin,
mit einer $C_8$ - bis $C_{20}$ -, vorzugsweise $C_8$ - bis $C_{12}$ - aromatischen Dicarbonsäure oder deren Derivate , beispielsweise Chloride, wie 2,6-Naphthalindicarbonsäure, vorzugsweise Isophthalsäure oder Terephthalsäure,
sowie deren Dimere, Trimere, Tetramere, Pentamere oder Hexamere,
Monomere oder Oligomere eines $C_2$ - bis $C_{20}$ -, vorzugsweise $C_2$ - bis $C_{12}$ - Alkyldiamins, wie Tetramethylendiamin oder vorzugsweise Hexamethylendiamin,
mit einer $C_9$ - bis $C_{20}$ -, vorzugsweise $C_9$ - bis $C_{18}$ - arylaliphatischen Dicarbonsäure oder deren Derivate, beispielsweise Chloride, wie o-, m- oder p-Phenylendiessigsäure,
sowie deren Dimere, Trimere, Tetramere, Pentamere oder Hexamere,
Monomere oder Oligomere eines $C_6$ - bis $C_{20}$ -, vorzugsweise $C_6$ - bis $C_{10}$ - aromatischen Diamins, wie m- oder p-Phenylendiamin,
mit einer $C_2$ - bis $C_{20}$ -, vorzugsweise $C_2$ - bis $C_{14}$ - aliphatischen Dicarbonsäure oder deren Mono- oder Dinitrile, wie Sebacinsäure, Decandicarbonsäure, Adipinsäure, Sebacinsäuredinitril, Decansäuredinitril oder Adipodinitril,
sowie deren Dimere, Trimere, Tetramere, Pentamere oder Hexamere,
Monomere oder Oligomere eines $C_6$ - bis $C_{20}$ - vorzugsweise $C_6$ - bis $C_{10}$ - aromatischen Diamins, wie m- oder p-Phenylendiamin,
mit einer $C_8$ - bis $C_{20}$ -, vorzugsweise $C_8$ - bis $C_{12}$ - aromatischen Dicarbonsäure oder deren Derivate , beispielsweise Chloride, wie 2,6-Naphthalindicarbonsäure, vorzugsweise Isophthalsäure oder Terephthalsäure,
sowie deren Dimere, Trimere, Tetramere, Pentamere oder Hexamere,
Monomere oder Oligomere eines $C_6$ - bis $C_{20}$ - vorzugsweise $C_6$ - bis $C_{10}$ - aromatischen Diamins, wie m- oder p-

Phenylendiamin,
mit einer $C_9$ - bis $C_{20}$ -, vorzugsweise $C_9$ - bis $C_{18}$ - arylaliphatischen Dicarbonsäure oder deren Derivate, beispielsweise Chloride, wie o-, m- oder p-Phenylendiessigsäure,
sowie deren Dimere, Trimere, Tetramere, Pentamere oder Hexamere,
Monomere oder Oligomere eines $C_7$ - bis $C_{20}$ -, vorzugsweise $C_8$ - bis $C_{18}$ - arylaliphatischen Diamins, wie m- oder p-Xylylendiamin,
mit einer $C_2$ - bis $C_{20}$ -, vorzugsweise $C_2$ - bis $C_{14}$ - aliphatischen Dicarbonsäure oder deren Mono- oder Dinitrile, wie Sebacinsäure, Decandicarbonsäure, Adipinsäure, Sebacinsäuredinitril, Decansäuredinitril oder Adipodinitril,
sowie deren Dimere, Trimere, Tetramere, Pentamere oder Hexamere,
Monomere oder Oligomere eines $C_7$ - bis $C_{20}$ -, vorzugsweise $C_8$ - bis $C_{18}$ - arylaliphatischen Diamins, wie m- oder p-Xylylendiamin,
mit einer $C_6$ - bis $C_{20}$ -, vorzugsweise $C_6$ - bis $C_{10}$ - aromatischen Dicarbonsäure oder deren Derivate , beispielsweise Chloride, wie 2,6-Naphthalindicarbonsäure, vorzugsweise Isophthalsäure oder Terephthalsäure,
sowie deren Dimere, Trimere, Tetramere, Pentamere oder Hexamere,
Monomere oder Oligomere eines $C_7$ - bis $C_{20}$ -, vorzugsweise $C_8$ - bis $C_{18}$ - arylaliphatischen Diamins, wie m- oder p-Xylylendiamin,
mit einer $C_9$ - bis $C_{20}$ -, vorzugsweise $C_9$ - bis $C_{18}$ - arylaliphatischen Dicarbonsäure oder deren Derivate, beispielsweise Chloride, wie o-, m- oder p-Phenylendiessigsäure,
sowie deren Dimere, Trimere, Tetramere, Pentamere oder Hexamere,
sowie Homopolymere, Copolymere, Mischungen und Pfropfungen solcher Ausgangsmonomere oder Ausgangsoligomere in Betracht.

Bevorzugt sind dabei solche Ausgangsmonomere oder Ausgangsoligomere, die bei der Polymerisation zu den Polyamiden Nylon 6, Nylon 6,6, Nylon 4,6, Nylon 6,10, Nylon 7, Nylon 11, Nylon 12 und den Aramiden Poly-metaphenylen-isophthalamid oder Poly-paraphenylen-terephthalamid, insbesondere zu Nylon 6 und Nylon 66, führen.

Die für die Verbindungen (II), (III), (IV), (V) und (VI) genannten Gewichtsanteile beziehen sich, sofern nichts anderes angegeben ist, auf die eingesetzte Menge an Monomer (I).

Erfindungsgemäß führt man die Polymerisation von Monomer (I) in Gegenwart eines sterisch gehinderten Piperidin-Derivats (II), das eine zur Amidbildung hinsichtlich der Polymerhauptkette von Polyamid (VIII) fähige Gruppe aufweist, oder Gemischen hiervon durch.

Bevorzugt kommen als Verbindungen (II) solche der Formel

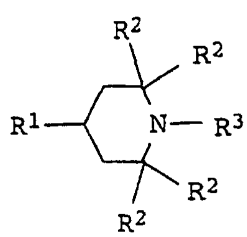

wobei

$R^1$ für eine funktionelle Gruppe steht, die zur Amidbildung gegenüber der Polymerhauptkette von Polyamid (VIII) fähig ist,

vorzugsweise eine Gruppe $-(NH)R^5$, wobei $R^5$ für Wasserstoff oder $C_1$-$C_8$-Alkyl steht, oder eine Carboxylgruppe oder ein Carboxylderivat oder eine Gruppe $-(CH_2)_x(NH)R^5$, wobei X für 1 bis 6 steht und R5 für Wasserstoff oder $C_1$-$C_8$-Alkyl steht, oder eine Gruppe $-(CH_2)_yCOOH$, wobei Y für 1 bis 6 steht, oder ein $-(CH_2)_yCOOH$ Säurederivat, wobei Y für 1 bis 6 steht,
insbesondere für eine Gruppe $-NH_2$ steht,

$R^2$ für eine Alkylgruppe steht, vorzugsweise eine C1-C4-Alkyl-gruppe, wie Methyl, Ethyl, n-Propyl, i-Propyl, n-Butyl, i-Butyl, s-Butyl, s-Butyl,

insbesondere eine Methylgruppe,

$R^3$ für Wasserstoff, $C_1$-$C_4$-Alkyl oder O-$R^4$ steht, wobei $R^4$ für Wasserstoff oder $C_1$-$C_7$ Alkyl steht,

insbesondere $R^3$ für Wasserstoff steht,
in Betracht.

In solchen Verbindungen reagieren üblicherweise die tertiären, insbesondere sekundären Aminogruppen der Piperidin-Ringsysteme dabei wegen sterischer Hinderung nicht.

Besonders bevorzugt als Verbindung (II) ist 4-Amino-2,2,6,6-Tetramethylpiperidin.

Erfindungsgemäß setzt man Verbindung (II) in Mengen von mindestens 0,01 Gew.-%, vorzugsweise mindestens 0,05 Gew.-%, insbesondere mindestens 0,1 Gew.-% ein.

Erfindungsgemäß setzt man Verbindung (II) in Mengen von höchstens 0,5 Gew.-%, vorzugsweise höchstens 0,3 Gew.-%, insbesondere höchstens 0,2 Gew.-% ein.

Erfindungsgemäß führt man die Polymerisation von Monomer (I) in Gegenwart einer Verbindung (III) mit mehreren, wie zwei, drei oder vier, vorzugsweise zwei, zur Amidbildung hinsichtlich der Polymerhauptkette von Polyamid (VIII) fähigen Aminogruppen oder Gemischen hiervon durch.

Als Verbindung (III) kommen vorteilhaft $C_2$ - bis $C_{20}$ -, vorzugsweise $C_2$ - bis $C_{12}$ - Alkyldiamine, wie Tetramethylendiamin oder vorzugsweise Hexamethylendiamin, $C_6$ - bis $C_{20}$ -, vorzugsweise $C_6$ - bis $C_{10}$ - aromatische Diamine, wie m- oder p-Phenylendiamin, oder $C_7$ - bis $C_{20}$ -, vorzugsweise $C_8$ - bis $C_{18}$ - arylaliphatische Diamine, wie m- oder p-Xylylendiamin, in Betracht oder solche Verbindungen (III), wie sie bei der Polymerisation von Monomer (I) üblicherweise als Kettenregler eingesetzt werden. Besonders bevorzugt ist Hexamethylendiamin.

Solche Verbindungen (III) können Substituenten tragen, wie Halogene, beispielsweise Fluor, Chlor oder Brom, Sulfonsäuregruppen oder deren Salze, wie Lithium-, Natrium-, Kalium-Salze, oder unsubstituiert sein.

Erfindungsgemäß setzt man Verbindung (III) in Mengen von mindestens 0,01 Gew.-%, vorzugsweise mindestens 0,05 Gew.-%, insbesondere mindestens 0,2 Gew.-% ein.

Erfindungsgemäß setzt man Verbindung (III) in Mengen von höchstens 0,5 Gew.-%, vorzugsweise höchstens 0,35 Gew.-%, insbesondere höchstens 0,25 Gew.-% ein.

Erfindungsgemäß führt man die Polymerisation von Monomer (I) gegebenenfalls in Gegenwart einer Verbindung (IV) mit einer zur Amidbildung hinsichtlich der Polymerhauptkette von Polyamid (VIII) fähigen Aminogruppe oder Gemischen durch.

Als Verbindung (IV) kommen vorteilhaft $C_2$ - bis $C_{20}$ -, vorzugsweise $C_2$ - bis $C_{12}$ - Alkylamine, wie Cyclohexylamin, $C_6$ - bis $C_{20}$ -, vorzugsweise $C_6$ - bis $C_{10}$ - aromatische Monoamine, wie Anilin, oder $C_7$ - bis $C_{20}$ -, vorzugsweise $C_8$ - bis $C_{18}$ - arylaliphatische Monoamine, wie Benzylamin, in Betracht oder solche Verbindungen (IV), wie sie üblicherweise bei der Polymerisation von Monomer (I) als Kettenregler eingesetzt werden.

Solche Verbindungen (IV) können Substituenten tragen, wie Halogene, beispielsweise Fluor, Chlor oder Brom, Sulfonsäuregruppen oder deren Salze, wie Lithium-, Natrium-, Kalium-Salze, oder unsubstituiert sein.

Vorteilhaft kann man Verbindung (IV) in Mengen von 0 bis 0,5 Gew.-%, vorzugsweise 0 bis 0,35 Gew.-%, insbesondere 0 bis 0,25 Gew.-% einsetzen.

Erfindungsgemäß führt man die Polymerisation von Monomer (I) gegebenenfalls in Gegenwart einer Verbindung (V) mit einer zur Amidbildung hinsichtlich der Polymerhauptkette von Polyamid (VIII) fähigen Carbonsäuregruppe oder Gemischen hiervon durch.

Als Verbindung (V) kommen vorteilhaft $C_2$ - bis $C_{20}$ -, vorzugsweise $C_2$ - bis $C_{12}$ - Carbonsäuren, wie Essigsäure, Propionsäure, $C_7$ - bis $C_{21}$ -, vorzugsweise $C_7$ - bis $C_{11}$ - aromatische Carbonsäuren, wie Benzoesäure, oder $C_8$ - bis $C_{21}$ -, vorzugsweise $C_9$ - bis $C_{19}$ - arylaliphatische Carbonsäuren in Betracht, oder solche Verbindungen (V), wie sie beispielsweise als Kettenregler bei der Polymerisation von Monomer (I) üblicherweise eingesetzt werden.

Solche Verbindungen (V) können Substituenten tragen, wie Halogene, beispielsweise Fluor, Chlor oder Brom, Sulfonsäuregruppen oder deren Salze, wie Lithium-, Natrium-, Kalium-Salze, oder unsubstituiert sein.

Vorteilhaft kann man Verbindung (V) in Mengen von 0 bis 0,5 Gew.-%, vorzugsweise 0 bis 0,35 Gew.-%, insbesondere 0 bis 0,25 Gew.-% einsetzen.

Erfindungsgemäß führt man die Polymerisation von Monomer (I) gegebenenfalls in Gegenwart einer von Monomer (I) abweichenden Verbindung (VI) mit mehreren, wie zwei, drei oder vier, vorzugsweise zwei, zur Amidbildung hinsichtlich der Polymerhauptkette von Polyamid (VIII) fähigen Carbonsäuregruppen oder Gemischen hiervon durch.

Als Verbindung (VI) kommen vorteilhaft $C_2$ - bis $C_{20}$ -, vorzugsweise $C_2$ - bis $C_{12}$ - Dicarbonsäuren, wie Sebacinsäure, Dodecansäure, Cyclohexan-1,4-dicarbonsäure, oder vorzugsweise Adipinsäure, $C_8$ - bis $C_{22}$ -, vorzugsweise $C_8$ - bis $C_{12}$ - aromatische Dicarbonsäuren, wie Benzol- und Naphthalindicarbonsäuren, vorzugsweise 2,6-Naphthalindicarbonsäure, Isophthalsäure oder Terephthalsäure, oder $C_9$ - bis $C_{22}$ -, vorzugsweise $C_9$ - bis $C_{20}$ - arylaliphatische Dicarbonsäuren in Betracht oder solche Verbindungen (VI), wie sie üblicherweise als Kettenregler bei der Polymerisation von Monomere (I) eingesetzt werden. Besonders bevorzugt sind Terephthalsäure und Isophthalsäure.

Solche Verbindungen (VI) können Substituenten tragen, wie Halogene, beispielsweise Fluor, Chlor oder Brom, Sulfonsäuregruppen oder deren Salze, wie Lithium-, Natrium-, Kalium-Salze, oder unsubstituiert sein.

Bevorzugt sind sulfonierte Dicarbonsäuren, insbesondere Sulfoisophthalsäure, sowie eines ihrer Salze, wie Alkalisalze, beispielsweise Lithium-, Natrium-, Kalium-Salze, vorzugsweise Lithium- oder Natrium-Salz, insbesondere Lithium-Salz.

Vorteilhaft kann man Verbindung (VI) in Mengen von 0 bis 0,5 Gew.-%, vorzugsweise 0 bis 0,35 Gew.-%, insbesondere 0 bis 0,25 Gew.-% einsetzen.

Besonders vorteilhaft kann man Verbindung (VI) in solchen Mengen einsetzen, daß die molare Menge der zur Amidbildung hinsichtlich der Polymerhauptkette von Polyamid (VIII) fähigen Carbonsäuregruppen von Verbindung (VI) kleiner ist als die molare Menge der zur Amidbildung hinsichtlich der Polymerhauptkette von Polyamid (VIII) fähigen Amingruppen von Verbindung (III).

Erfindungsgemäß ergänzen sich die Mengen an (I), (II), (III), (IV), (V) und (VI) zu 100 %.

Erfindungsgemäß sind die Komponenten (II), (III), (IV), (V) und (VI) über Amidbindungen an die Polymerkette gebunden.

Erfindungsgemäß ist die Summe der zur Amidbildung hinsichtlich der Polymerkette fähigen Amingruppen der Komponenten (II), (III) und (IV) größer als oder gleich wie, vorzugsweise größer als, die Summe der zur Amidbildung hinsichtlich der Polymerkette fähigen Carbonsäuregruppen der Komponenten (II), (V) und (VI).

Die Verbindungen der Formeln (II), (III), (IV), (V) und (VI) können den Ausgangsmonomeren (I) oder der polymerisierenden Reaktionsmischung zugesetzt werden und durch Reaktion mindestens einer der amidbildenden Gruppen an die Polymerhauptkette des Polyamids gebunden werden.

Durch das erfindungsgemäße Verfahren werden Polyamide mit den eingangs erwähnten vorteilhaften Eigenschaften erhalten.

Die Polymerisation bzw. Polykondensation der Ausgangsmonomere (I) in Gegenwart der Verbindungen (II), (III), (IV), (V) und (VI) wird vorzugsweise nach den üblichen Verfahren durchgeführt. So kann die Polymerisation von Caprolactam als Monomer (I) in Gegenwart von (II), (III), (IV), (V) und (VI) beispielsweise nach den in DE-A 14 95 198, DE-A 25 58 480, DE-A 44 13 177, Polymerization Processes, Interscience, New York, 1977, S. 424-467 und Handbuch der Technischen Polymerchemie, VCH Verlagsgesellschaft, Weinheim, 1993, S. 546-554 beschriebenen kontinuierlichen oder diskontinuierlichen Verfahren erfolgen. Die Polymerisation von AH-Salz als (I) in Gegenwart von (II), (III), (IV), (V) und (VI) kann nach dem üblichen diskontinuierlichen Verfahren (siehe: Polymerization Processes, Interscience, New York, 1977, S. 424-467, insbesondere 444-446) oder nach einem kontinuierlichen Verfahren, z.B. gemäß EP-A 129 196, erfolgen. Grundsätzlich können (II), (III), (IV), (V), (VI) und Ausgangsmonomere (I) getrennt oder als Gemisch dem Reaktor zugeführt werden.

In einer anderen bevorzugten Ausgestaltung wird die Polymerisation bzw. Polykondensation nach dem erfindungsgemäßen Verfahren in Gegenwart mindestens eines Pigments durchgeführt. Bevorzugte Pigmente sind Titandioxid, wobei Titandioxid vorzugsweise in der Anatas-Modifikation vorliegt, oder farbgebende Verbindungen anorganischer oder organischer Natur. Die Pigmente werden vorzugsweise in einer Menge von 0 bis 5 Gewichtsteile, insbesondere 0,02 bis 2 Gewichtsteile, jeweils bezogen auf 100 Gewichtsteile Polyamid, zugegeben. Die Pigmente können dem Reaktor mit den Ausgangsstoffen oder getrennt davon zugeführt werden. Durch die Verwendung von (II), (III), (IV), (V) und (VI) (auch als Kettenregler-Bestandteil) werden die Eigenschaften des Polymers deutlich verbessert gegenüber einem Polymeren, das nur Pigment und keine Verbindungen (II), (III), (IV), (V), (VI) oder nur Pigment und eine außerhalb des eingangs definierten Verfahrens liegende Kombination von Verbindungen (II), (III), (IV), (V) und (VI) enthält.

Die erfindungsgemäßen Polyamide können vorteilhaft zur Herstellung von Fäden, Fasern, Folien, Flächengebilden und Formkörpern verwendet werden. Besonders vorteilhaft sind dabei Fäden, die aus Polyamiden, insbesondere Polycaprolactam, durch Schnellspinnen bei Abzugsgeschwindigkeiten von mindestens 4000 m/min erhalten werden. Die unter Verwendung der erfindungsgemäßen Polyamide erhaltenen Fäden, Fasern, Folien, Flächengebilde und Formkörper können vielseitig verwendet werden, beispielsweise als Textilbekleidung oder Teppichfasern.

Beispiele

Die Hitzefixierung erfolgte nach dem Hörauf-Suessen Heat-Set-Verfahren auf einer Garnveredelungsanlage GVA 5000 mit den folgenden Parametern:

| | |
|---|---|
| Fadenzahl | 6 |
| Temperatur | 190-200°C |
| Verweilzeit | 40-60 Sekunden |

(fortgesetzt)

| | |
|---|---|
| Taupunkt | 88-98°C |

Die APHA-Zahl wurde gemäß europäischer Norm EN 1557 gegenüber Pt-Co-Standard bestimmt.

Zur Bestimmung der relativen Viskosität wurden 500 mg der Probe in einem 50 ml-Eichkolben eingewogen und mit 96 Gew.-%iger Schwefelsäure aufgefüllt. Die Probe wurde homogen aufgelöst.

In einem Ubbelohde Viscosimeter No. II wurde bei 25°C ± 0,05°C die Auslaufzeit zwischen der oberen und der unteren Kalibriermarke bestimmt. Die Messungen wurden wiederholt, bis drei aufeinanderfolgende Messungen in einem Bereich von 0,3 Sekunden lagen. In gleicher Weise wurde die Auslaufzeit für das Lösungsmittel bestimmt. Die relative Viskosität (RV) wurde bestimmt gemäß

$$RV = T / T_0$$

mit:

T: Auslaufzeit der Lösung [Sekunden]

$T_0$ : Auslaufzeit des Lösungsmittels [Sekunden]

Die in den Beispielen angegebenen Mengen-Werte für die Verbindungen TAD, HMD und TPS sind Gew.-% bezogen auf (I).

Vergleichsbeispiele 1-2, Beispiel 1

Es wurden Garne aus Caprolactam als Monomer (I) mit den Zusammensetzungen gemäß Tabelle 1 hergestellt und die APHA-Werte vor und nach Hitzefixierung bestimmt.

Tabelle 1

| | TAD | HMD | TPS | APHA vor Fix. | APHA nach Fix. | RV vor Fix. | RV nach Fix. |
|---|---|---|---|---|---|---|---|
| Vgl. 1 | 0,12 | -- | 0,33 | 11 | 66 | 2,84 | 2,75 |
| Vgl. 2 | -- | 0,32 | -- | 27 | 45 | 2,75 | 2,72 |
| Bsp. 1 | 0,16 | 0,22 | -- | 13 | 27 | 2,79 | 2,79 |

TAD: 4-Amino-2,2;6,6-tetramethylpiperidin
HMD: Hexamethylendiamin
TPS: Terephthalsäure

## Patentansprüche

1. Verfahren zur Herstellung von aus Monomeren (I), ausgewählt aus der Gruppe bestehend aus Lactamen, w-Aminocarbonsäuren, w-Aminocarbonsäurenitrilen, w-Aminocarbonsäureamiden, w-Aminocarbonsäuresalze, w-Aminocarbonsäureester, äquimolaren Mischungen aus Diaminen und Dicarbonsäuren, Dicarbonsäure/Diamin-Salzen, Dinitrilen und Diaminen oder Gemischen solcher Monomere, zugänglichen Polyamiden (VIII), **dadurch gekennzeichnet, daß** Polymerisation der Monomere (I) in Gegenwart von

   (II) 0,01 bis 0,5 Gew.-% eines sterisch gehinderten Piperidin-Derivats, das eine zur Amidbildung hinsichtlich der Polymerhauptkette von Polyamid (VIII) fähige funktionelle Gruppe aufweist,

   (III) 0,01 bis 0,5 Gew.-% einer Verbindung mit mehreren zur Amidbildung hinsichtlich der Polymerhauptkette von Polyamid (VIII) fähigen Amingruppen

   und gegebenenfalls einer Verbindung ausgewählt aus der Gruppe bestehend aus
   einer Verbindung (IV) mit einer zur Amidbildung hinsichtlich der Polymerhauptkette von Polyamid (VIII) fähigen

Amingruppe,
einer Verbindung (V) mit einer zur Amidbildung hinsichtlich der Polymerhauptkette von Polyamid (VIII) fähigen Carbonsäuregruppe
oder einer von Monomer (I) abweichenden Verbindung (VI) mit mehreren zur Amidbildung hinsichtlich der Polymerhauptkette von Polyamid (VIII) fähigen Carbonsäuregruppen
oder deren Gemische
durchgeführt wird, wobei sich die Mengen an (I), (II), (III), (IV), (V) und (VI) zu 100 % ergänzen, die Komponenten (II), (III), (IV), (V) und (VI) über Amidbindungen an die Polymerkette gebunden sind und die Summe der zur Amidbildung hinsichtlich der Polymerkette fähigen Amingruppen der Komponentew (II), (III) und (IV) größer als oder gleich wie die Summe der zur Amidbildung hinsichtlich der Polymerkette fähigen Carbonsäuregruppen der Komponenten (II), (V) und (VI) ist.

**2.** Verfahren nach Anspruch 1, wobei Verbindung (III) zwei zur Amidbildung hinsichtlich des Polyamids (VIII) fähige Amingruppen aufweist.

**3.** Verfahren nach Anspruch 1 oder 2, wobei man als Verbindung (III) Hexamethylendiamin einsetzt.

**4.** Verfahren nach den Ansprüchen 1 bis 3, wobei man als Verbindung (II) 4-Amino-2,2,6,6,-Tetramethylpiperidin einsetzt.

**5.** Verfahren nach den Ansprüchen 1 bis 4, wobei Verbindung (VI) zwei zur Amidbildung hinsichtlich des Polyamids (VIII) fähige Carbonsäuregruppen aufweist.

**6.** Verfahren nach den Ansprüchen 1 bis 5, wobei man als Verbindung (VI) eine sulfonierte Dicarbonsäure einsetzt.

**7.** Verfahren nach den Ansprüchen 1 bis 6, wobei man als Verbindung (VI) Sulfoisophthalsäure oder eines ihrer Salze einsetzt.

**8.** Polyamid (VIII), erhältlich nach einem Verfahren gemäß den Ansprüchen 1 bis 7.

**9.** Verwendung eines Polyamids (VIII) gemäß Anspruch 8 zur Herstellung von Fasern, Flächengebilden und Formkörpern.

**10.** Fasern erhältlich aus Polyamid (VIII) gemäß Anspruch 8.

**11.** Flächengebilde erhältlich aus Polyamid (VIII) gemäß Anspruch 8.

**12.** Formkörper erhältlich aus Polyamid (VIII) gemäß Anspruch 8.

## Claims

**1.** A process for the preparation of polyamides (VIII) obtainable from monomers (I) selected from the group consisting of lactams, ω-aminocarboxylic acids, ω-aminocarboxylic acid nitriles, ω-aminocarboxamides, ω-aminocarboxylic acid salts, ω-aminocarboxylic acid esters, equimolar mixtures of diamines and dicarboxylic acids, dicarboxylic acid/diamine salts, dinitriles and diamines, or mixtures of such monomers, wherein the polymerization of the monomers (I) is carried out in the presence of

(II) 0.01 to 0.5% by weight of a sterically hindered piperidine derivative which has a functional group capable of amide formation with respect to the polymer main chain of the polyamide (VIII),

(III) 0.01 to 0.5% by weight of a compound which has several amine groups capable of amide formation with respect to the polymer main chain of the polyamide (VIII),

and optionally a compound selected from the group consisting of
a compound (IV) which has an amine group capable of amide formation with respect to the polymer main chain of the polyamide (VIII),
a compound (V) which has a carboxylic acid group capable of amide formation with respect to the polymer main

chain of the polyamide (VIII),
and a compound (VI), different from the monomer (I), which has several carboxylic acid groups capable of amide formation with respect to the polymer main chain of the polyamide (VIII),
or mixtures thereof,
the amounts of (I), (II), (III), (IV), (V) and (VI) adding up to 100%, the components (II), (III), (IV), (V) and (VI) being bonded to the polymer chain via amide linkages, and the sum of the amine groups of the components (II), (III) and (IV) capable of amide formation with respect to the polymer chain being greater than or equal to the sum of the carboxylic acid groups of the components (II), (V) and (VI) capable of amide formation with respect to the polymer chain.

**2.** A process as claimed in claim 1 wherein the compound (III) has two amine groups capable of amide formation with respect to the polyamide (VIII).

**3.** A process as claimed in claim 1 or 2 wherein hexamethylenediamine is used as the compound (III).

**4.** A process as claimed in any of claims 1 to 3 wherein 4-amino-2,2,6,6-tetramethylpiperidine is used as the compound (II).

**5.** A process as claimed in any of claims 1 to 4 wherein the compound (VI) has two carboxylic acid groups capable of amide formation with respect to the polyamide (VIII).

**6.** A process as claimed in any of claims 1 to 5 wherein a sulfonated dicarboxylic acid is used as the compound (VI).

**7.** A process as claimed in any of claims 1 to 6 wherein sulfoisophthalic acid or one of its salts is used as the compound (VI).

**8.** A polyamide (VIII) obtainable by a process as claimed in any of claims 1 to 7.

**9.** The use of a polyamide (VIII) as claimed in claim 8 for the production of fibers, textile fabrics and moldings.

**10.** A fiber obtainable from a polyamide (VIII) as claimed in claim 8.

**11.** A textile fabric obtainable from a polyamide (VIII) as claimed in claim 8.

**12.** A molding obtainable from a polyamide (VIII) as claimed in claim 8.

## Revendications

**1.** Procédé de préparation de polyamides (VIII) préparables à partir de monomères (I) choisis parmi le groupe constitué des lactames, des acides ω-aminocarboxyliques, des nitriles d'acide ω-aminocarboxylique, des amides d'acide ω-aminocarboxylique, des sels d'acide ω-aminocarboxylique, des esters d'acide ω-aminocarboxylique, des mélanges équimolaires de diamines et d'acides dicarboxyliques, des sels d'acide dicarboxylique/diamine, des dinitriles et des diamines ou des mélanges de tels monomères, **caractérisé en ce que** la polymérisation des monomères (I) est effectuée en présence

(II) de 0,01 à 0,5% en poids d'un dérivé de pipéridine à empêchement stérique qui présente un groupe fonctionnel capable de formation d'amide à l'égard de la chaîne principale de polymère du polyamide (VIII),
(III)de 0,01 à 0,5% en poids d'un composé comportant plusieurs groupes amine capables de formation d'amide à l'égard de la chaîne principale de polymère du polyamide (VIII), et éventuellement d'un composé choisi parmi le groupe constitué

d'un composé (IV) comportant un groupe amine capable de formation d'amide à l'égard de la chaîne principale de polymère du polyamide (VIII),
d'un composé (V) comportant un groupe acide carboxylique capable de formation d'amide à l'égard de la chaîne principale de polymère du polyamide (VIII), ou
d'un composé (VI) dérivant du monomère (I) et présentant plusieurs groupes acide carboxylique capables de formation d'amide à l'égard de la chaîne principale de polymère du polyamide (VIII), ou

de leurs mélanges,
les quantités de (I), (II), (III), (IV), (V) et (VI) donnant 100%, les composants (II), (III), (IV), (V) et (VI) étant liés à la chaîne de polymère par l'intermédiaire de liaisons amide et la somme des groupes amine des composants (II), (III) et (IV) capables de formation d'amide à l'égard de la chaîne de polymère étant supérieure à ou égale à la somme des groupes acide carboxylique des composants (II), (V) et (VI) capables de formation d'amide à l'égard de la chaîne de polymère.

**2.** Procédé suivant la revendication 1, dans lequel le composé (III) présente deux groupes amine capables de formation d'amide à l'égard du polyamide (VIII).

**3.** Procédé suivant l'une des revendications 1 et 2, dans lequel on met en oeuvre de l'hexaméthylènediamine comme composé (III).

**4.** Procédé suivant l'une des revendications 1 à 3, dans lequel on met en oeuvre de la 4-amino-2,2,6,6-tétraméthylpipéridine comme composé (II).

**5.** Procédé suivant l'une des revendications 1 à 4, dans lequel le composé (VI) présente deux groupes acide carboxylique capables de formation d'amide à l'égard du polyamide (VIII).

**6.** Procédé suivant l'une des revendications 1 à 5, dans lequel on met en oeuvre un acide dicarboxylique sulfoné comme composé (VI).

**7.** Procédé suivant l'une des revendications 1 à 6, dans lequel on met en oeuvre de l'acide sulfoisophtalique ou un de ses sels comme composé (VI).

**8.** Polyamide (VIII) que l'on peut obtenir suivant un procédé selon l'une des revendications 1 à 7.

**9.** Utilisation d'un polyamide (VIII) suivant la revendication 8, pour la préparation de fibres, d'articles plans et de corps façonnés.

**10.** Fibres que l'on peut obtenir à partir de polyamide (VIII) selon la revendication 8.

**11.** Articles plans que l'on peut obtenir à partir de polyamide (VIII) selon la revendication 8.

**12.** Corps façonnés que l'on peut obtenir à partir de polyamide (VIII) selon la revendication 8.